Europäisches Patentamt

European Patent Office

Office européen des brevets

(11) Numéro de publication: **0 425 346 A1**

## (12) DEMANDE DE BREVET EUROPEEN

(21) Numéro de dépôt: 90402929.5

(22) Date de dépôt: 18.10.90

(51) Int. Cl.⁵: **B65G 1/04**

(30) Priorité: 20.10.89 FR 8913731

(43) Date de publication de la demande:
02.05.91 Bulletin 91/18

(84) Etats contractants désignés:
AT BE CH DE DK ES FR GB GR IT LI LU NL SE

(71) Demandeur: SIVAB
16 rue de la Tour d'Auvergne
F-75009 Paris(FR)

(72) Inventeur: Grisi, Jean-Marie
12, rue du Parc
F-95220 Herblay(FR)

(74) Mandataire: Hud, Robert
Cabinet COLLIGNON 6, rue de Madrid
F-75008 Paris(FR)

(54) **Dispositif pour la préhension de bacs de rangement et pour leur déplacement horizontal le long d'une plateforme de manutention.**

(57) Sur la plateforme mobile 1 du système de rangement peut se déplacer latéralement un chariot 2 pour faire saillie partiellement d'un côté ou de l'autre de la plateforme 1. Le chariot 2 porte deux chaînes sans fin parallèles 4 qui travaillent dans un plan vertical. Chaque chaîne 4 porte deux paires de taquets 11,11′,12,12′ qui font saillie vers l'extérieur et sont conçus pour s'engager dans l'une ou l'autre des poignées 16,16′ d'un bac 15 à manipuler. Les taquets sont disposés le long de la chaîne 4 de façon que les taquets 11,12′ soient engagés simultanément à l'intérieur des poignées 16,16′ du bac 15, alors que la distance entre les taquets 11,11′ et entre les taquets 12,12′ est supérieure à la dimension des poignées 16,16′ bac.

Le dispositif permet de manutentionner, de façon simple et rapide, des bacs dont les poignées sont en matière plastique moulée ou en tôle pliée de faible épaisseur.

FIG.7

# DISPOSITIF POUR LA PRÉHENSION DE BACS DE RANGEMENT ET POUR LEUR DÉPLACEMENT HORIZONTAL LE LONG D'UNE PLATE-FORME DE MANUTENTION

L'invention concerne les systèmes de rangement automatisés pour documents ou autres objets qui comprennent, de part et d'autre d'une allée centrale; deux rayonnages symétriques à alvéoles en rangées et colonnes pour recevoir des bacs de rangement formant des tiroirs mobiles qui sont destinés à être extraits de leurs alvéoles pour être amenés sur une plateforme, généralement mobile en hauteur le long d'un mât lui-même animé d'un mouvement horizontal, qui peut les transporter jusqu'à un ou plusieurs postes de consultation ou de réception, où ils sont déposés d'un côté ou de l'autre de la plateforme, puis pour être repris par la plateforme après consultation ou traitement de leur contenu, et remis en place dans des alvéoles des rayonnages.

L'invention concerne plus particulièrement le système d'extraction équipant la plateforme et qui permet d'effectuer la préhension et la mise en place d'un bac sur la plateforme, puis son évacuation de la plateforme d'un côté ou de l'autre de celle-ci.

Dans des systèmes d'extraction connus, un doigt porté par une chaîne sans fin circulant dans un plan horizontal s'engage latéralement dans la poignée du bac à une extrémité de son parcours, puis exerce une traction sur cette poignée pour assurer le déplacement du bac. De tels systèmes d'extraction sont d'un fonctionnement satisfaisant mais l'effort localisé appliqué à la poignée du bac nécessite que ces poignées présentent une forte résistance, ce qui complique la fabrication des bacs en empêchant l'utilisation de poignées en matière plastique moulée ou en tôle pliée de faible épaisseur.

La présente invention a pour objet de remédier à cet inconvénient en proposant un nouveau système d'extraction qui est simple et robuste, qui permet avec une grande fiabilité la préhension et la manutention de bacs allégés dont les poignées peuvent être réalisées en matière plastique moulée ou en tôle pliée de faible épaisseur, et qui présente une bonne vitesse de fonctionnement.

Selon l'invention, le dispositif extracteur comprend un chariot porté par la plateforme et mobile latéralement entre une position médiane dans laquelle il se superpose exactement à la plateforme et une position extrême dans laquelle il fait partiellement saillie hors de celle-ci, et un ensemble de deux chaînes sans fin porté par le chariot. Les deux chaînes sans fin, orientées parallèlement dans la direction longitudinale du chariot, fonctionnent chacune autour de deux pignons dans un plan vertical et sont symétriques par rapport à un plan vertical passant par l'axe longitudinal médian du chariot. Symétriquement l'une de l'autre, chaque chaîne sans fin porte dans son plan, en saillie vers l'extérieur, deux paires de taquets disposés le long de la chaîne de telle façon que deux taquets appartenant chacun à une paire soient distants l'un de l'autre sur la chaîne d'une longueur égale à l'entraxe qui sépare les poignées avant et arrière des bacs de rangement, les deux autres taquets étant alors de préférence symétriques l'un de l'autre par rapport au milieu de la distance séparant les deux pignons.

Ainsi pour la prise d'un bac rangé dans son alvéole, un déplacement du chariot en position extrême dans la direction de ce bac amènera pour chaque chaîne sans fin, l'un des taquets de la paire située sur cette chaîne sans fin du côté correspondant au bac, en appui contre la poignée du bac alors que l'autre taquet de la paire se trouve au-dessous de cette poignée. Après quoi un déplacement de la chaîne sans fin dans le sens approprié introduit ledit autre taquet à l'intérieur de la poignée puis entraîne le bac vers la plateforme par traction de ce taquet sur la face intérieure de la poignée, jusqu'à ce que le bac soit disposé entièrement sur le chariot. Dans cette situation, l'un des taquets appartenant à l'autre paire s'est également engagé dans la poignée opposée. Pendant une partie initiale du déplacement de la chaîne sans fin, s'effectue simultanément le retour du chariot à sa position de départ médiane sur la plateforme.

Avantageusement, les taquets se correspondant sur les deux chaînes sans fin sont reliés ensemble deux par deux au moyen d'une barre transversale qui s'engage donc toute entière à l'intérieur de la poignée du bac et qui coopère sur toute sa longueur avec la poignée de bac à tirer, en répartissant l'effort sur toute cette longueur et en permettant donc d'utiliser des poignées de plus faible résistance qu'avec les extracteurs connus, par exemple des poignées en matière plastique moulée ou en tôle pliée.

On remarquera de plus que, contrairement aux extracteurs conventionnels, les taquets d'entraînement s'engagent dans la poignée du bac par le dessous de celle-ci et non pas par le côté. On peut donc utiliser des poignées fermées latéralement, ce qui renforce considérablement leur résistance.

D'autre part, on notera que le déplacement du chariot peut être réalisé au moyen d'un système à excentrique assurant une bonne vitesse d'exécution. Comme de plus le transfert d'un bac de son logement jusqu'à la plateforme, et inversement, est assuré par des déplacements simultanés des chaînes sans fin et du chariot, il est aisé d'atteindre une bonne vitesse d'opération.

On remarquera encore que le dispositif est particulièrement simple et robuste, en utilisant des chaînes sans fin qui, orientées dans un plan vertical, travaillent normalement. De plus, comme le positionnement du bac en cours de transfert est lié strictement aux chaînes sans fin, le suivi des mouvements peut sans difficulté être réalisé par encodeur, sans nécessiter des capteurs de position comme c'est le cas dans les dispositifs conventionnels.

On notera aussi que, selon une caractéristique supplémentaire destinée à éviter un soulèvement indésirable du bac lors de la prise de celui-ci en position de stockage, on peut prévoir avantageusement un moyen permettant au chariot qui est alors en position sortie d'effectuer automatiquement un déplacement supplémentaire en direction du bac de façon que le taquet de chaîne qui vient s'engager à l'intérieur de la poignée du bac se trouve dans une position pratiquement verticale pour coopérer avec la face intérieure de cette poignée.

Pour bien faire comprendre le dispositif selon l'invention, on en décrira ci-après, à titre d'exemple sans caractère limitatif, une forme d'exécution préférée en référence au dessin schématique annexé dans lequel :

la figure 1 est une vue de profil du dispositif extracteur selon l'invention équipant un système de rangement automatisé à bacs coulissants logés dans des alvéoles en rangées et colonnes, un bac étant figuré sur le chariot en position médiane ;

les figures 2A à 2E montrent, en vues de profil, les phases successives de fonctionnement du dispositif extracteur de la figure 1 pour la préhension d'un bac disposé à gauche de la plateforme et pour son amenée sur celle-ci ;

les figures 3A à 3E sont des vues en perspective qui correspondent respectivement aux figures 2A à 2E ;

les figures 4A à 4E sont des vues de profil, analogues aux figures 2A à 2E, mais montrant la préhension d'un bac disposé à droite de la plateforme ;

les figures 5A à 5D sont des vues de profil montrant les phases successives de fonctionnement du dispositif extracteur pour la remise en place, à partir de la plateforme, d'un bac se logeant dans un alvéole situé à gauche de la plateforme ;

les figures 6A à 6C sont des vues en élévation du système de commande de déplacement du chariot dans trois positions successives ;

la figure 7 est une vue de côté du système de commande des figures 6A à 6C ; et

les figures 8A à 8C montrent les positions relatives d'une paire de taquets équipant la chaîne du dispositif et de la poignée d'un bac stocké, qui correspondent respectivement aux positions du système de commande représentées aux figures 6A à 6C .

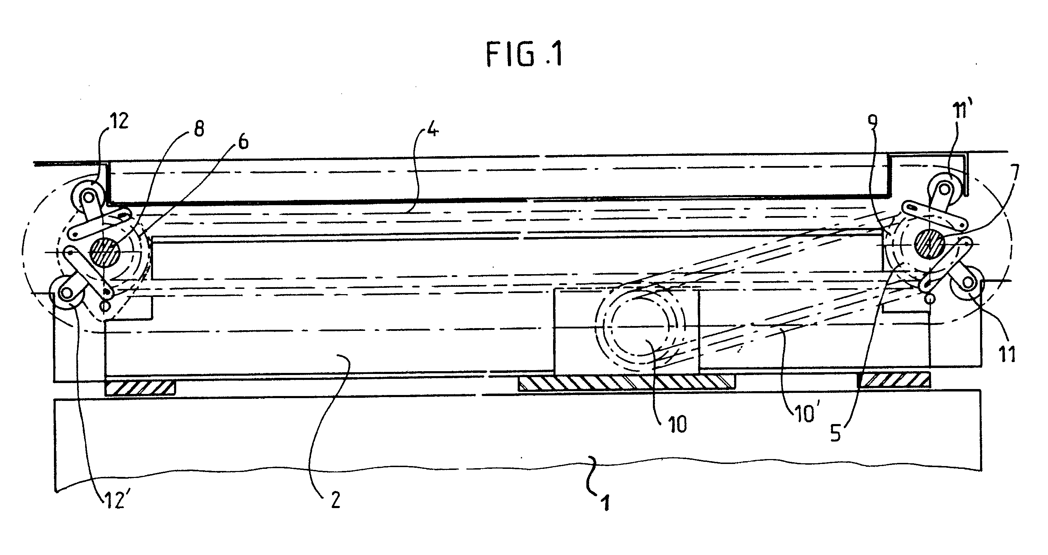

En référence à la figure 1, on a représenté une plateforme 1 conçue pour se déplacer de façon connue en soi le long d'un mât vertical (non représenté au dessin) lui-même destiné à se déplacer horizontalement le long d'une allée centrale séparant deux rayonnages symétriques à alvéoles en rangées et colonnes recevant des bacs de rangement mobiles formant tiroirs. Sur la plateforme 1 peut se déplacer transversalement à l'allée centrale selon une course limitée, vers la droite comme vers la gauche, un chariot 2 portant le dispositif extracteur 3.

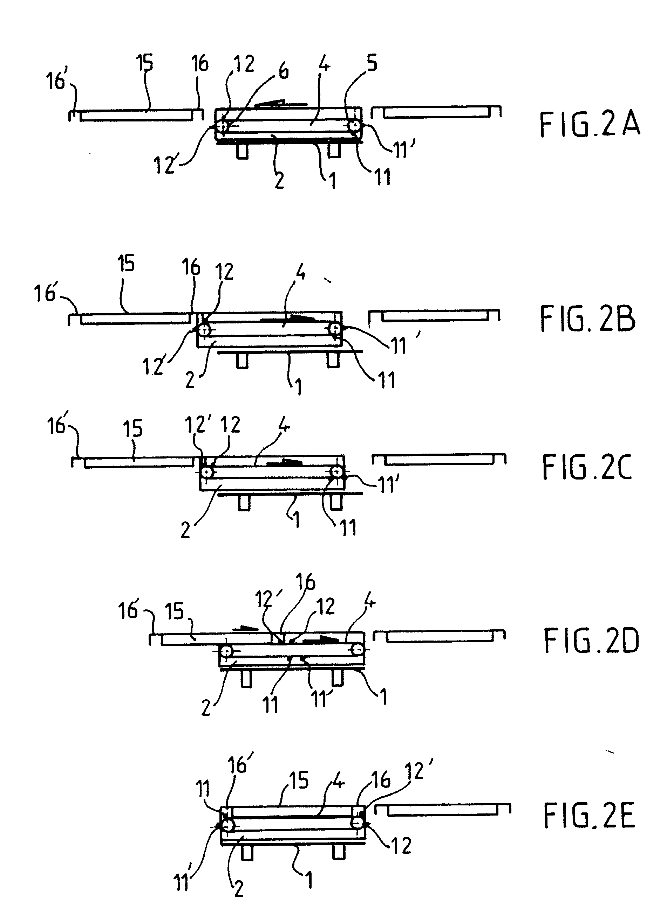

L'extracteur 3 comprend deux chaînes sans fin 4, disposées symétriquement par rapport à un plan vertical passant par l'axe central longitudinal du chariot 2 (c'est-à-dire perpendiculairement à la direction de l'allée centrale). Chaque chaîne 4, qui fonctionne dans un plan perpendiculaire à celui du chariot 2, circule autour de deux pignons 5, 6 disposés en bout de deux arbres parallèles 7, 8. L'arbre 7 porte un pignon supplémentaire 9 entraîné en rotation à partir d'un arbre moteur 10 par l'intermédiaire d'une chaîne 10$'$. L'arbre 8 tourne librement. Chaque chaîne 4 porte deux couples de taquets 11, 11$'$ et 12, 12$'$ qui sont disposés de façon que, comme représenté à la figure 2A, lorsque deux taquets 11$'$, 12$'$ pris chacun dans un des deux couples de taquets sont alignés avec les axes des pignons 5 et 6, les deux autres taquets 11, 12 occupent des positions symétriques par rapport au milieu de la distance séparant ces deux pignons 5, 6. Les deux taquets d'un même couple doivent être séparés sur la chaîne 4 d'une distance supérieure à la dimension des poignées.

Un dispositif à excentrique, non représenté au dessin, commande sélectivement le déplacement vers la gauche ou vers la droite de l'ensemble formé par le chariot 2 et l'extracteur 3 qu'il porte, puis le retour de cet ensemble à sa position initiale sur la plateforme 1. Les taquets se correspondant deux à deux sur une chaîne sans fin 4 et sur l'autre sont reliés ensemble par une barre transversale, respectivement 13, 13$'$, 14, 14$'$, qui comme on le verra plus loin lors de la description du fonctionnement, est destinée à coopérer avec la poignée latérale du bac à manipuler.

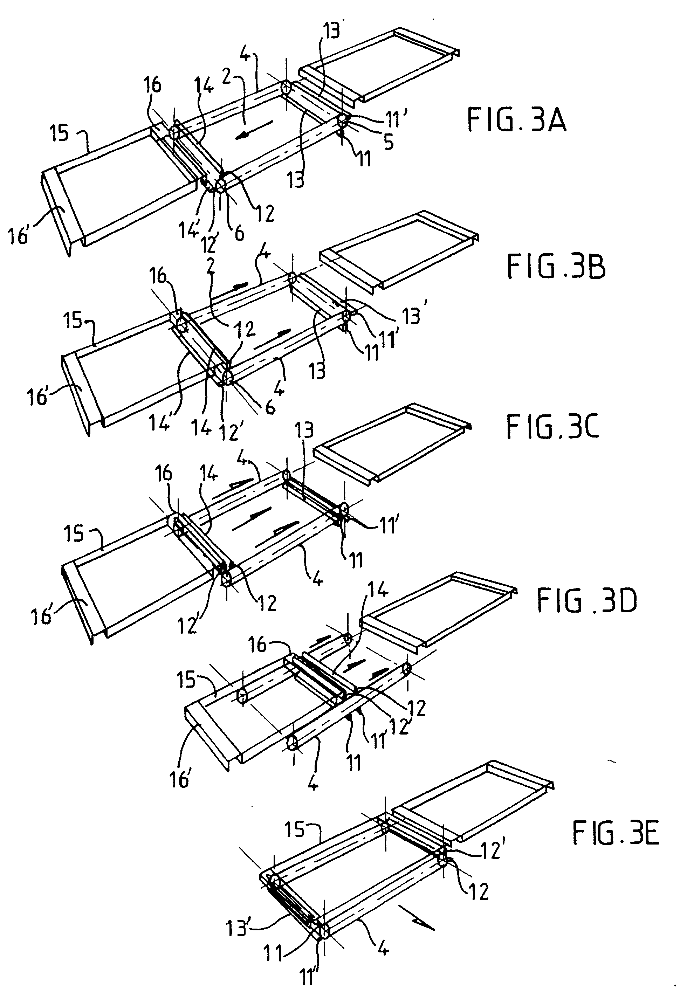

On décrira maintenant, en référence aux figures 2A à 2E et 3A à 3E, le fonctionnement du dispositif selon l'invention pour la préhension d'un bac logé dans un alvéole situé à gauche de la plateforme 1 et le transfert de ce bac sur la plateforme. Aux figures 2A et 3A on a représenté la plateforme 1 en regard du bac 15 à saisir sur sa gauche, chaque taquet 12′ étant aligné avec les axes des pignons 5, 6 correspondants, alors que chaque taquet 12 est disposé sensiblement au-dessus de l'axe du pignon 6 correspondant. Dans une première phase du mouvement, le chariot 2 se déplace vers la gauche jusqu'à ce que le taquet 12 vienne en contact avec la face extérieure de la poignée 16 du bac 15 (position des figures 2B et 3B). Dans cette position les taquets 12′ et la barre 14′ qui les relie se trouvent au-dessous de la partie creuse de la poignée 16. On commande alors le déplacement des chaînes 4 dans le sens horaire ce qui a pour effet dans un premier temps d'amener les taquets 12′ (et la barre 14′) au contact de la face interne de la poignée 16 (position des figures 2C et 3C), puis d'entraîner le bac dans un mouvement de translation vers la droite. Simultanément, dès que les taquets 12′ sont au contact de la poignée 16, le déplacement du chariot 2 est commandé pour le ramener à sa position initiale sur la plateforme 1 (position des figures 2D et 3D). La circulation des chaînes 4 se poursuit alors jusqu'à ce que le bac 15 soit totalement en appui sur la plateforme 1 (voir figures 2E et 3E), position dans laquelle les taquets 11 se trouvent également engagés dans la seconde poignée 16′ du bac. Par déplacement de la plateforme 1 le long du mât, et de ce mât le long de l'allée centrale, on peut alors amener le bac 15 prélevé jusqu'au poste de consultation.

On comprend que, la contrainte de traction exercée sur la poignée 16 du bac 15 se trouvant répartie sur toute la longueur de cette poignée grâce à la barre 14′ reliant les deux taquets 12′ des chaînes 4, on peut sans inconvénient utiliser des bacs comportant des poignées de moindre résistance, et donc des bacs réalisés par exemple en matière plastique moulée ou en tôle pliée, en réduisant ainsi le prix de revient par rapport aux bacs utilisés dans les dispositifs conventionnels.

On remarquera aussi que le déplacement du bac 15, pour son transfert sur la plateforme 1, étant assuré simultanément par la circulation des chaînes 4 et la translation du chariot 2, ce déplacement s'effectue donc à une vitesse sensiblement supérieure aux dispositifs connus utilisant seulement la circulation de chaînes.

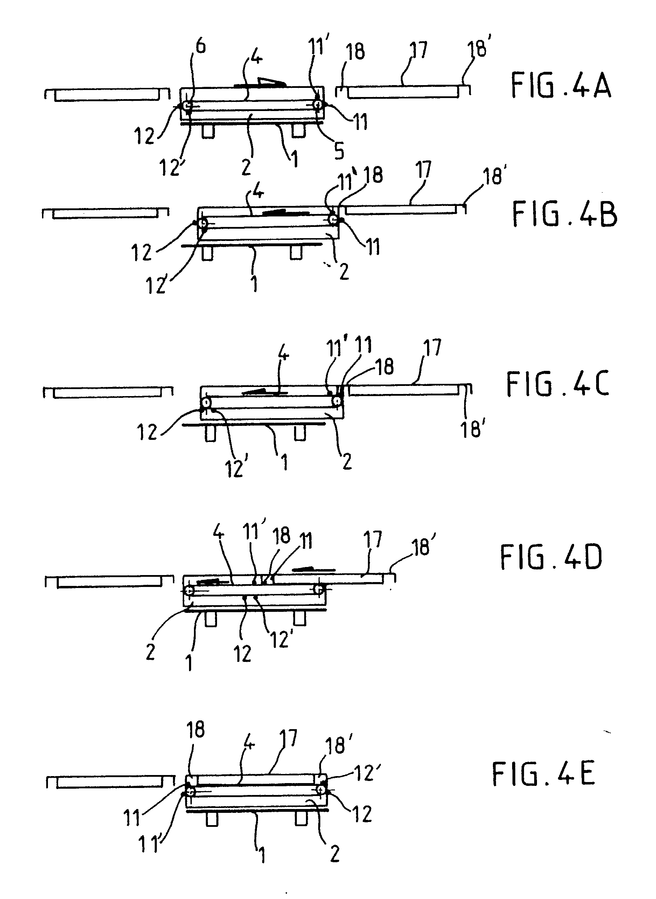

Comme on l'a représenté aux figures 4A à 4E, le cycle d'opérations est exactement le même pour la préhension d'un bac 17 disposé à droite de la plateforme 1, c'est-à-dire :
- disposition, si nécessaire, des taquets 11, 11′ situés du côté droit de façon que le taquet 11 soit aligné avec les axes des pignons 5, 6 et que le taquet 11′ soit au-dessus de l'axe du pignon 5 ;
- déplacement du chariot 2 vers la droite jusqu'à ce que le taquet 11′ rencontre la face extérieure de la poignée 18 sur bac 15 (figure 4B),

- déplacement des chaînes 4 dans le sens anti-horaire jusqu'à ce que le taquet 11 engage la face intérieure de la poignée 18 (figure 4C),
- poursuite du déplacement des chaînes 4 et translation simultanée du chariot 2 vers la gauche jusqu'à sa position initiale (figure 4D),
- fin du déplacement des chaînes 4 jusqu'à ce que le bac 17 soit en position sur la plateforme 1 (figure 4E) et le taquet 12′ soit engagé dans la poignée 18′.

En se référant à la figure 4E on voit que, à la fin des opérations de préhension d'un bac 17 situé sur la droite de la plateforme 1, les taquets portés par chaque chaîne 4 se trouvent exactement dans la même position qu'à la fin des opérations de préhension d'un bac 15 situé sur la gauche de la plateforme (figure 2E). C'est-à-dire que les taquets 11 et 12′ sont chacun disposés à l'intérieur d'une poignée du bac, alors que les taquets 11′ et 12 sont disposés à l'extérieur des poignées. On verra, en référence à ce qui va suivre, que cette disposition permet de procéder immédiatement à la remise en place du bac aussi bien du côté gauche que du côté droit, sans avoir à réaliser au préalable quelque réglage que ce soit de la position de ces taquets.

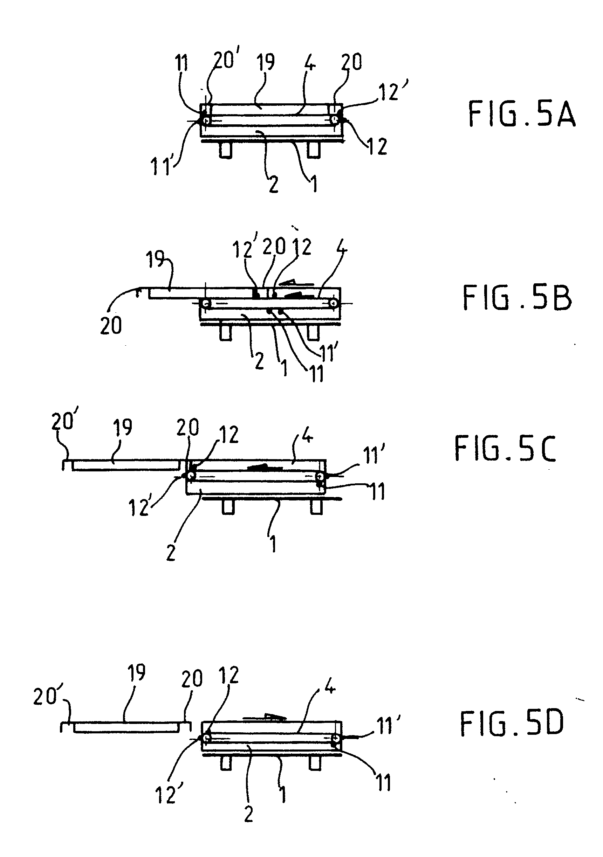

Ainsi, en se référant aux figures 5A à 5D, on a représenté la suite d'opérations relatives au transfert, dans un alvéole situé à gauche de la plateforme 1, d'un bac 19 porté par cette plateforme après avoir été prélevé indifféremment à droite ou à gauche de celle-ci. A la figure 5A, montrant le bac 19 en attente sur la plateforme 1, les taquets 11, 11′ et 12, 12′ se trouvent dans la position représentée aux figures 2E et 4E. On commande alors la circulation des chaînes 4 dans le sens anti-horaire, le taquet 12′ venant engager la face intérieure du bac 19 pour provoquer une translation de celui-ci vers la gauche par rapport au chariot 2 et à la plateforme 1 (figure 5B). A un instant prédéterminé du déplacement des chaînes 4, s'effectue simultanément un déplacement vers la gauche du chariot 2 de façon qu'au moment où le chariot 2 se trouve en bout de course, le bac 19 se trouve totalement à l'extérieur du chariot par l'effet de la poussée du taquet 12, alors que le taquet 12′ se trouve dégagé de l'intérieur de la poignée 20 (figure 5C). Le chariot 2 retourne alors à sa position initiale sur la plateforme 1, sans déplacement des chaînes 4 (figure 5D). Les taquets 11, 11′, 12, 12′ sont alors dans la même position que celle représentée à la figure 2A en permettant la prise immédiate d'un bac situé sur la gauche de la plateforme 1. Si par contre on veut saisir un bac situé sur la droite, il faudra alors commander au préalable un léger déplacement de la chaîne 4 dans le sens anti-horaire, pour amener les taquets 11,11′ dans la position de la figure 4A.

On comprend que, si le bac porté par la plateforme avait été à déposer sur la droite et non pas sur la gauche, le cycle de mouvement aurait été le même que celui représenté aux figures 5A à 5D, sauf que les chaînes 4 se seraient déplacées dans le sens horaire et que la translation du chariot 2 se serait effectuée vers la droite. De façon similaire, après retour du chariot 2 seul sur la plateforme 1, les taquets 11, 11′, 12, 12′ seraient alors en position pour la prise immédiate d'un bac disposé sur la droite alors que, pour la prise d'un bac à gauche, il faudrait commander au préalable un léger déplacement des chaînes 4 dans le sens horaire pour amener les taquets 12, 12′ dans la position de la figure 2A.

On notera que, dans le dispositif selon l'invention tel que décrit ci-dessus, le positionnement du bac en cours de transfert est strictement lié aux chaînes 4, de sorte que le suivi des mouvements des bacs peut être assuré par un dispositif encodeur, sans nécessiter l'utilisation de capteurs de position.

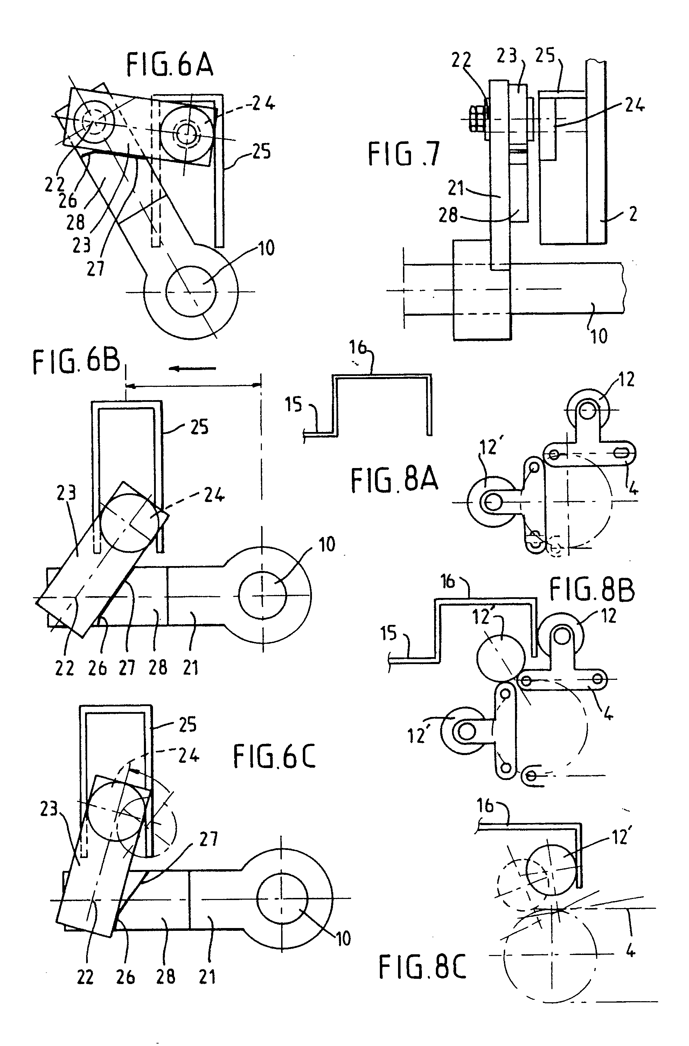

On remarque que, comme on peut le voir plus en détail aux figures 8A et 8B, lorsque le taquet 12 est venu en butée contre la face extérieure de la poignée 16 du bac 15 à saisir et que par rotation de la chaîne 4 le taquet 12′ s'introduit à l'intérieur de cette poignée, ce taquet 12′ engage la face intérieure de la poignée 16 en étant dans une position oblique. Il en résulte alors que la force de poussée appliquée par ce taquet 12′ à la face intérieure de la poignée 16 comporte une composante verticale importante ce qui peut provoquer un soulèvement du bac ou des soubressauts de celui-ci.

L'invention remédie à cet inconvénient en prévoyant un système de commande du déplacement du chariot 2 permettant une adaptation automatique de la position du taquet 12′, lorsqu'il engage la face intérieure de la poignée 16 du bac, de façon que la force de poussée appliquée par ce taquet 12′ s'exerce dans une direction pratiquement horizontale.

A cet effet, en se référant plus particulièrement aux figures 6 à 8, l'arbre moteur 10 porte rigidement un bras 21 à l'extrémité libre duquel est articulée, autour d'un axe 22, une biellette 23 sur laquelle est monté en rotation libre un galet 24. Ce galet 24 est guidé pour se déplacer verticalement à l'intérieur d'une coulisse 25 en forme de U renversé qui est solidaire du chariot 2. Le débattement angulaire de la biellette 23 par rapport au bras 21 est limité dans les deux sens par des surfaces de butée 26 et 27 qui constituent deux bords successifs d'une partie renflée 28 du bras 21.

Dans la position représentée à la figure 6A, qui correspond à la position de la chaîne 4 de la figure 8A, le chariot 2 se trouve en position centrale de repos en étant totalement superposé à la plateforme 1. Lorsqu'on désire saisir le bac 15 rangé à gauche en regardant la figure 8A, on commande la rotation de l'arbre 10 dans le sens anti-horaire jusqu'à sa position représentée à la figure 6B en entraînant, par l'action du galet 24 à l'intérieur de la coulisse 25, une translation du chariot 2 jusqu'à ce que le taquet 12 vienne buter contre la face extérieure de la poignée 16 (position en trait plein de la figure 8B). Pendant ce déplacement la biellette 23 est plaquée contre la butée 27. On commande alors la circulation de la chaîne 4 dans le sens horaire jusqu'à la position représentée en trait mixte à la figure 8B dans laquelle le taquet 12′, qui présente alors une orientation oblique, engage la face intérieure de la poignée 16.

La continuation du mouvement de la chaîne 4 entraîne, en raison de l'inertie du bac 15 et de la possibilité de débattement angulaire de la biellette 23, un pivotement du taquet 12′ dans le sens horaire autour de sa zone de contact avec la poignée 16 et donc un déplacement supplémentaire vers la gauche du chariot 2 (et de la coulisse 25 qui lui est solidaire) jusqu'à ce que la biellette 23 vienne en butée contre la surface 26 (positions en trait plein des figures 6C et 8C). On voit alors que le taquet 12′ se trouve en position pratiquement verticale à l'intérieur de la poignée 16, c'est-à-dire dans une position tout à fait favorable pour agir sur le bac en vue de son déplacement horizontal.

La commande de rotation du bras 10 dans le sens horaire, vers la fin du mouvement de circulation de la chaîne 4, ramène les divers éléments dans leur position de la figure 6A correspondant à une position du chariot exactement superposée à la plateforme 1.

Si on désire saisir un bac rangé à droite, le mouvement sera exactement symétrique de l'autre côté, le débattement angulaire de la biellette 23, de sa position en butée contre la surface 26 à sa position en butée contre la surface 27, permettant un déplacement supplémentaire du chariot 2 vers la droite et en conséquence un positionnement pratiquement vertical du taquet 11 à l'intérieur de la poignée du bac.

On comprendra que la description ci-dessus a été donnée à simple titre d'exemple, sans caractère limitatif, et que des adjonctions ou des modifications constructives pourraient y être apportées sans sortir du cadre de l'invention définie par les revendications qui suivent.

## Revendications

1. Dispositif extracteur pour l'équipement de la plateforme mobile (1) d'un système de rangement automatisé comprenant des bacs (15,17,19) logés dans des alvéoles en rangées et colonnes ménagés dans deux rayonnages symétriques disposés de part et d'autre d'une allée centrale, comprenant deux chaînes sans fin (4) symétriques par rapport à un plan vertical passant par l'axe longitudinal de la plateforme (1), fonctionnant dans un plan vertical et circulant de façon synchronisée autour de pignons (5,6), et des organes de préhension (11,11', 12,12') portés symétriquement par les deux chaînes (4) et conçus pour coopérer sélectivement avec la poignée (16,18,20) d'un bac (15,17,19) disposé sur le côté de la plateforme (1) afin de transférer ce bac (15,17,19) sur celle-ci, caractérisé en ce que lesdites chaînes (4) sont portées par un chariot (2) mobile entre une position rétractée où il est totalement en appui sur la plateforme (1) et une position dans laquelle il fait saillie vers la droite ou vers la gauche par rapport à la plateforme (1), et en ce que les organes de préhension portés par chaque chaîne (4) comprennent deux paires de taquets (11,11', 12,12') faisant saillie vers l'extérieur dans le plan de la chaîne (4), ces taquets (11,11', 12,12') étant disposés le long de la chaîne (4) de façon que, lorsqu'un bac (15,17,19) se trouve sur la plateforme (1) en position rétractée, deux taquets (11',12) appartenant chacun à une paire soient engagés dans les poignées avant et arrière du bac de rangement, les deux autres taquets (11,12') étant symétriques par rapport au milieu de la distance séparant les axes des deux pignons (5,6).

2. Dispositif extracteur selon la revendication 1, caractérisé en ce que les deux taquets (11,11', 12,12') d'une même paire sont distants entre eux sur la chaîne (4) d'une longueur supérieure à la dimension des poignées du bac.

3. Dispositif extracteur selon la revendication 1 ou la revendication 2, caractérisé en ce que les taquets (11,11', 12,12') se correspondant deux à deux sur les deux chaînes (4) sont reliés ensemble par une barre (13,13', 14,14') qui coopère avec la poignée (16,18,20) du bac (15,17,19) à déplacer sur toute la longueur de cette poignée.

4. Dispositif selon l'une quelconque des revendications 1 à 3, caractérisé en ce que la commande du déplacement du chariot (2) par rapport à la plateforme (1) est assurée par un système à excentrique.

5. Dispositif selon l'une quelconque des revendications précédentes caractérisé en ce que, dans la première phase du mouvement d'amenée d'un bac (15,17,19) sur la plateforme (1) et dans la dernière phase du mouvement de remise en place d'un bac (15,17,19) hors de la plateforme (1), les déplacements respectifs des chaines (4) et du chariot (2) s'effectuent simultanément.

6. Dispositif selon l'une quelconque des revendications précédentes, caractérisé en ce que la commande de déplacement du chariot (2) comprend un moyen permettant, dans une phase de préhension d'un bac (15) se trouvant en position de rangement avec un premier taquet (12) de l'une desdites paires de taquets engageant la face extérieure de la poignée (16) du bac (15) alors que le second taquet (12') de cette paire de taquets s'introduit à l'intérieur de ladite poignée (16), un déplacement supplémentaire du chariot (2) vers ledit bac (15) de façon que ledit second taquet (12') prenne une position pratiquement verticale à l'intérieur de ladite poignée (15) pour coopérer avec la face intérieure de celle-ci et entraîne le bac (15) vers une position en appui complet sur le chariot (2).

7. Dispositif selon la revendication 6, caractérisé en ce que ledit moyen est constitué par une biellette (23) articulée sur un bras pivotant de commande (21) et coopérant avec un organe de guidage (25) solidaire du chariot (2), le débattement angulaire de la biellette (23) par rapport au bras de commande (21) étant limité par des butées (26, 27) de telle sorte que, en fin du mouvement de sortie du chariot (2) assuré par le pivotement du bras de commande (21), le pivotement de la biellette (23) de l'une à l'autre de ses positions en butée, sous l'effet d'une traction exercée sur le chariot (2) par ledit second taquet (12') venant engager la face intérieure de la poignée (16) du bac (15), permet ledit déplacement supplémentaire du chariot (2).

8. Dispositif selon la revendication 7, caractérisé en ce que la coopération entre ladite biellette (23) et l'organe de guidage (25) solidaire du chariot (2) s'effectue au moyen d'un galet (24) monté en rotation libre sur la biellette (23) et qui peut se déplacer verticalement à l'intérieur de l'organe de guidage (25).

9. Dispositif selon la revendication 7 ou 8, caractérisé en ce que les butées (26, 27) limitant le débattement angulaire de la biellette (23) sont constituées par deux bords successifs d'une partie renflée (28) du bras de commande (21).

FIG.1

FIG.2A

FIG.2B

FIG.2C

FIG.2D

FIG.2E

FIG.3A

FIG.3B

FIG.3C

FIG.3D

FIG.3E

FIG.4A

FIG.4B

FIG.4C

FIG.4D

FIG.4E

FIG.5A

FIG.5B

FIG.5C

FIG.5D

FIG.6A

24
25
22
26
28
23
27
10

FIG.7

22  23  25
24
21
28
2
10

FIG.6B

16
15
25
23
24
10
22  26  27  28  21

FIG.8A

12
12'
4

FIG.6C

25
24
23
27
22  26  28  21
10

FIG.8B

16
15
12'
12
4
12'

16
12'
4

FIG.8C

12

**Office européen
des brevets**

**RAPPORT DE RECHERCHE
EUROPEENNE**

Numéro de la demande

**EP 90 40 2929**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-1 752 298   (MOLINS MACHINE CO. LTD.)<br>* page 1, line 12 - page 12, line 11; figures 2,8,9 *<br>– – – | 1,5,6 | B 65<br>G 1/04 |
| Y | DE-A-3 205 708   (M.A.N.)<br>* page 9, line 19 - page 10, line 38; figure 4 *<br>– – – | 1,5,6 | |
| A | EP-A-0 253 775   (PIANELLI & TRAVERSA)<br>* page 5, line 28 - page 6, line 30; figures 2-6 *<br>– – – | 1,2 | |
| A | DE-A-3 247 158   (J. SANDT AG)<br>* page 11, line 25 - page 12, line 8; figure 5 *<br>– – – – – | 1,7 | |

**DOMAINES TECHNIQUES
RECHERCHES (Int. Cl.5)**

B 65 G
B 66 F

Le présent rapport de recherche a été établi pour toutes les revendications

| Lieu de la recherche | Date d'achèvement de la recherche | Examinateur |
|---|---|---|
| Berlin | 08 février 91 | WESTERMAYER W G |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons

& : membre de la même famille, document
    correspondant